# EUROPÄISCHE PATENTANMELDUNG

(11) **EP 1 396 573 A1**
(43) Veröffentlichungstag der Anmeldung: **10.03.2004**
(21) Anmeldenummer: 03019116.7
(22) Anmeldetag: 23.08.2003
(51) Int. Cl.: D06N 3/04, D06M 15/263, B32B 27/04, E21D 11/38

(54) **Textile zwei- oder dreidimensionale Gebilde enthaltend quellfähige Materialien**

(30) Priorität: 05.09.2002 DE 10241530
(71) Anmelder: BASF Aktiengesellschaft, 67056 Ludwigshafen (DE); Hildener Filz Produktion GmbH & Co.KG, 40721 Hilden (DE)
(72) Erfinder: Beutler, Kuno, 67245 Lambsheim (DE); Mossbach, Ralf, 67473 Lindenberg (DE); Weber, Manfred, 68199 Mannheim (DE); Steinmetz, Bernhard, Dr., 67117 Limburgerhof (DE); Schupp, Eberhard, Dr., 67269 Grünstadt (DE); Warneke, Wilfried, 41199 Mönchen-Gladbach (DE); Mohr, Peter, 81825 München (DE)

(57) **Zusammenfassung**

Textile zwei- oder dreidimensionale Gebilde aus Fasern und/oder Bändern und quellfähigen Materialien, wobei die im Gebilde vorliegenden Fasern und/oder Bänder sowie die quellfähigen Materialien jeweils in einer solchen Menge vorliegen, dass die Fasern und/oder Bänder von den quellfähigen Materialien umhüllt sind und die Hohlräume der Gebilde im gequollenen Zustand vollständig mit stoffgebundenem Wasser gefüllt sind und wobei als quellfähige Materialien carboxylgruppenreiche Polymere verwendet werden, welche in Form einer Emulsion aus organischen Lösungsmitteln und Wasser sowie den carboxylgruppenreichen Polymeren auf die Fasern und/ oder Bänder aufgebracht werden.

## Beschreibung

Die vorliegende Erfindung betrifft textile zwei- oder dreidimensionale Gebilde aus Fasern und/oder Bändern und quellfähigen Materialien, wobei die im Gebilde vorliegenden Fasern und/oder Bänder sowie die quellfähigen Materialien jeweils in einer solchen Menge vorliegen, dass die Fasern und/oder Bänder von den quellfähigen Materialien umhüllt sind und die Hohlräume der Gebilde im gequollenen Zustand vollständig mit stoffgebundenem Wasser gefüllt sind und wobei als quellfähige Materialien carboxylgruppenreiche Polymere verwendet werden, welche in Form einer Emulsion aus organischen Lösungsmitteln und Wasser sowie den carboxylgruppenreichen Polymeren auf die Fasern und/oder Bänder aufgebracht werden.

Weiterhin betrifft die vorliegende Erfindung ein Verfahren zur Herstellung der erfindungsgemäßen zwei- oder dreidimensionalen Gebilde aus Fasern und/oder Bändern und quellfähigen Materialien sowie deren Verwendung als Dichtungsmaterialien für den Straßen-, Tunnel- und Wasserbau sowie für Baugruben, Hochwasserschutz und Dachabdichtungen. Die vorliegende Erfindung erstreckt sich auch auf Emulsionen aus organischen Lösungsmitteln, Wasser sowie carboxylgruppenreichen Polymeren.

In vielen Bereichen des Bauwesen sind Abdichtungen der Bauwerke gegen eindringendes Tag-, Grund-, Schichten- oder Sickerwasser erforderlich. Zu diesem Zweck verwendet man u.a. Bitumenschweißbahnen (US-A 2,015,102, US-A 2,160,342) Kunststoffdichtungen (DE-A 19930701), Schaumstoffbänder (DE-A 2819604, DE-B 1223407) oder Tondichtungsbahnen zum Abdichten.

Kunststoffdichtungsbahnen und nicht vollflächig aufgeklebte Bitumendichtungen haftet der Nachteil an, dass sich bei einem Schaden das eindringende Wasser zwischen Dichtungsschicht und dem Bauwerk mehr oder minder leicht ausbreiten kann. Besonders bei Betonbauwerken dringt dann das unter der Dichtungsschicht sickernde Wasser an porösen Stellen oder Rissen in den Beton ein. Dort entstehen Rostschäden an der Bewehrung. An der Innenseite der Wände und Decken entstehen feuchte Stellen. Weiter kann das Wasser bis an die Bauwerksfugen sickern und dort austreten.

Tondichtungsbahnen verwenden als Dichtungsmaterial meist Bentonit, das im Gegensatz zu den als Trägermaterial häufig verwendeten Geotextilien nicht filterstabil ist. Das Bentonit kann durch sickerndes Wasser ausgewaschen werden, wodurch die Dichtungswirkung verloren geht. Dagegen verhindern Tondichtungsbahnen durch das beim Quellen aus der Oberfläche tretende Bentonit das Längssickern von eingedrungenem Wasser.

Zur Abdichtung von Kellern, Tiefgaragen, Grundwasserwannen oder ähnlichen Bauwerken gegen von außen drückendes Wasser aus Bodenschichten, beispielsweise Hangwasser oder Grundwasser im Hochund Ingenieurbau stehen zwei anerkannte Bauweisen zur Verfügung.

Die übliche Bauweise ist die weiße Wanne, bei der wasserdichter Beton, eine aufwendige zusätzliche Bewehrung zur Vermeidung von Rissen und Fugenbändern zwischen den einzelnen Bauteilen oder Arbeitsfugen zum Einsatz kommen. Dennoch auftretende Risse werden mit Injektionsharzen verpreßt.

Die schwarze Wanne hat die Bezeichnung von den meistens verwendeten Bitumendichtungsbahnen. In neuerer Zeit kommen aber auch Kunststoffdichtungen zum Einsatz (DE-A 19930701).

Tondichtungsbahnen werden für sogenannte braune Wannen eingesetzt. Hier nutzt man den Nachteil der unzureichenden Filterstabilität, in dem das Bentonit aus der Tondichtungsbahn in porösen Beton eingeschwemmt wird und damit zu seiner Abdichtung führt.

Büro und Industriebauten besitzen meistens Flachdächer. Für Wohngebäude werden diese weniger verwendet, weil die Gefahr von undichten Stellen doch groß ist. Wegen der Dampfdiffusion werden Flachdachabdichtungen nur punkt- oder linienförmig befestigt. Nach einer Beschädigung der Abdichtung breitet sich das einsikkernde Wasser leicht unter der Dichtung aus und führt zu nassen Stellen und Bauschäden.

Im Tunnelbau ist die Abdichtung einmal zum Schutz des Bauwerks erforderlich. Tropfendes Wasser gefährdet aber auch den Benutzer des Tunnels durch Glatteisbildung in Straßentunneln oder Kurzschluss in elektrifizierten Bahntunneln.

Bei in offener Bauweise erstellten Tunneln muss die Betonkonstruktion gegen das durch die spätere Auffüllung sickernde Wasser geschützt werden. Auch hier kann sich Wasser nach Schäden an der Abdichtung zwischen Abdichtung und Betondecke ausbreiten. Es tritt dann in Rissen, Schwachstellen oder an den Fugen aus.

Maschinell gebohrte bzw. gefräste oder bergmännisch aufgefahrene Tunnel können sehr weit unter dem Grundwasserspiegel verlaufen. Die Abdichtung wird dann mit sehr hohem Drücken belastet. Durch den hohen Wasserdruck wird das Wasser weiter unter den beschädigten Abdichtungen verteilt.

Im Erdbau des Straßenbaues muss in Wasserschutzgebieten der Straßenkörper gegen den durchlässigen Untergrund abgedichtet werden. Dies geschieht heute trotz der bekannten Nachteile hinsichtlich Filterstabilität und der Fügetechnik für die Bahnenstöße oftmals mit Tondichtungsbahnen. Die Tondichtungsbahn muss frostsicher und gegen Austrocknung gesichert eingebaut sein.

Regenrückhalte- und Abscheidebecken oder Schlammteiche erhalten in durchlässigen Böden eine Abdichtung aus Kunststoffdichtungsbahnen und sogenannten Schutzvliesen. Zum Befahren der Becken mit Geräten bei Wartungsarbeiten muss oftmals eine Betonsohle eingebaut werden.

Bei deren Herstellung dringt Zementschlamm in die über der Dichtungsbahn eingebauten Schutzvliese ein und härtet aus, wodurch die Vliese teilweise ihre Schutzfunktion verlieren. Durch die jetzt raue Struktur scheuert das Vlies bei Bewegungen z.B. aus Wärmedehnungen auf der Oberfläche der Abdichtung.

Werden solche Becken mit Tondichtungsbahnen abgedichtet, muss diese ausreichend mit Erdmaterial überschüttet werden, um die Frostsicherheit zu gewährleisten und ein Austrocknen zu vermeiden.

In Bewässerungs- oder Kraftwerkskanäle werden häufig Beton- oder Asphaltdichtungen eingebaut. Diese erhalten eine zusätzliche Abdichtung aus Kunststoffdichtungsbahnen oder auch Tondichtungsbahnen. Auch hier entstehen die gleichen Probleme wie in den Rückhaltebecken.

Die einzelnen Kunststoffdichtungsbahnen werden an den Stoßstellen bei der Verlegung überlappt verschweißt. Bitumenbahnen werden stumpf aneinander gestoßen und durch einen auf die Stoßfuge geklebten Streifen überlappt. Tondichtungsbahnen werden überlappt verlegt. In die Fuge der Überlappung wird Bentonitpulver eingestreut oder eine Bentonitpaste eingearbeitet.

Auf eine Bauwerksfläche aufgebrachte Abdichtungen bieten keinen Schutz gegen eine Unterläufigkeit nach einer Beschädigung der Abdichtung. Zwischen Bauwerksfläche und Abdichtungen werden nach dem heutigen Stand der Technik keine Schutzvliese eingebaut, weil diese bei Beschädigung der Abdichtung das eindringende Wasser aufgrund ihrer horizontalen Durchlässigkeit vollflächig verteilen würden.

Aufgelegte oder in die Erde eingebaute Dichtungsbahnen mit Schutzvliese werden auf Wasserdruck von oben oder unten beansprucht. Hier ist die vertikale Durchlässigkeit maßgebend. Bei Dichtungsbahnen aus unterschiedlichen Produkten, z.B. Tondichtungsbahnen, muss darauf geachtet werden, dass der dichtende Spezialton nicht aus dem Trägermaterial des Schutzvlieses ausgewaschen werden kann.

Aus der DE-A 19625245 sind mehrlagige Abdichtungen für Hohlräume wie zum Beispiel Tunnels bekannt, welche Dichtungsbahnen aus Kunststoffen und eine Einlageschicht zwischen den Dichtungsbahnen aufweisen. In der Einlageschicht sind stark quellende chemische oder mineralische Füllstoffe eingebaut. Die hierbei beschriebenen Abdichtungen sind aber noch hinsichtlich ihrer Sperrwirkung gegenüber eindringendem Wasser verbesserungswürdig.

Der vorliegenden Erfindung lag daher die Aufgabe zu Grunde, den geschilderten Nachteilen abzuhelfen und ein neues Abdichtungsgebilde herzustellen, welches u.a. eine hohe Schutzfunktion für benachbarte Schichten, insbesondere aus Kunststoff aufweist und welches sich auch dadurch auszeichnet, dass die unkontrollierte Ausbreitung von Wasser unterhalb der Abdichtung keine Beschädigung der benachbarten Schichten hervorruft. Weiterhin soll das neue Abdichtungsgebilde gegen senkrecht zur Produktfläche drükkendes Wasser dicht sein.

Demgemäß wurden neuartige textile zwei- oder dreidimensionale Gebilde aus Fasern und/oder Bändern und quellfähigen Materialien entwickelt, wobei die im Gebilde vorliegenden Fasern und/oder Bänder sowie die quellfähigen Materialien jeweils in einer solchen Menge vorliegen, dass die Fasern und/oder Bänder von den quellfähigen Materialien umhüllt sind und die Hohlräume der Gebilde im gequollenen Zustand vollständig mit stoffgebundenem Wasser gefüllt sind und wobei als quellfähige Materialien carboxylgruppenreiche Polymere verwendet werden, welche in Form einer Emulsion aus organischen Lösungsmitteln und Wasser sowie den carboxylgruppenreichen Polymeren auf die Fasern und/oder Bänder aufgebracht werden.

Weiterhin wurde ein verbessertes Verfahren zur Herstellung der erfindungsgemäßen textilen Gebilde angewandt. Darüber hinaus wurden ausgehend von den erfindungsgemäßen textilen Gebilden verbesserte Dichtungsmaterialien für den Straßen-, Tunnel- und Wasserbau sowie für Baugruben, Hochwasserschutz und Dachabdichtungen bereitgestellt. Die vorliegende Erfindung erstreckt sich auch auf die erfindungsgemäß einzusetzenden Emulsionen als solche.

Geeignete zwei- oder dreidimensionale Gebilde sind u.a. entsprechende Vliese, Gewirke, Gewebe oder Gestricke oder Kombinationen hiervon. Unter einem Vlies versteht man üblicherweise ein nichtgewebtes und nicht gewirktes Gebilde, welches Fasern oder Bänder enthalten kann. Gewirke sind textile Gebilde, die dadurch entstehen, dass Maschen gebildet werden, die sich gegenseitig halten. Gewebe sind textile Gebilde aus sich rechtwinklich kreuzenden Garnen oder Bändern, welche auf Webstühlen hergestellt werden. Die erfindungsgemäßen zwei- oder dreidimensionalen Gebilde liegen vorzugsweise in Form von Vliesen oder Geweben vor. Geeignete Vliese sind u.a. Spinnvliese, Nadelvliese oder aber wasserstrahlverfestigte Vliese. Die Verfestigung der Vliese kann mechanisch, thermisch oder chemisch erfolgen. Die erfindungsgemäßen Gebilde können dabei sowohl eher zweidimensional, also flächig, als auch eher dreidimensional, d.h. mit einer entsprechenden Dicke, hergestellt sein.

Die erfindungsgemäßen textilen zwei- oder dreidimensionalen Gebilde können aus Bändern oder aus Fasern bestehen, wobei letztere bevorzugt verwendet werden. Geeignete Bänder sind u.a. Bändchen insbesondere solche aus textilen Stoffen oder Folienbändchen aus üblichen Folienmaterialien, beispielsweise aus Kunststoffen wie Polyethylen oder Polypropylen. Als Fasern können Stapelfasern oder Endlosfasern (Filamente) eingesetzt werden. Die Fasern können u.a. synthetische, mineralischer oder natürlicher Art sein, wobei insbesondere synthetische oder mineralische Fasern eingesetzt werden. Als Beispiele für synthetische Fasern wären u.a. zu nennen Fasern aus Polyethylen, Polypropylen, Polybutylenterephthalat, Polyamid, Polyethylenterephthalat, Polyester, Polysulfon oder Polyetherketon. Mineralische Fasern können u.a. aus keramischen Materialien, Siliciumcarbid oder aus Bornitrid bestehen. Denkbar ist auch die Verwendung von Fasern aus Kohlenstoff oder Glasfasern.

Die in den textilen Gebilden vorliegenden Fasern und/oder Bänder sowie die quellfähigen Materialien liegen jeweils in einer solchen Menge vor, dass die Fasern und/oder Bänder von den quellfähigen Materialien umhüllt sind und die Hohlräume der Gebilde im gequollenen Zustand vollständig mit stoffgebundenem Wasser gefüllt sind. Hinsichtlich der Menge an quellfähigen Materialien werden üblicherweise pro m² an fertigem Quellvlies 0,05 bis 20 kg, insbesondere 0,1 bis 10 kg dieser quellfähigen Materialien eingesetzt. Was die Menge an Fasern und/oder Bändern pro m² an fertigem Quellvlies betrifft, so beträgt diese üblicherweise 0,1 bis 2 kg, insbesondere 0,15 bis 1 kg.

Um die Wasserundurchlässigkeit in der horizontalen Ebene zu erreichen, muss das erfindungsgemäße textile Gebilde in der Weise mit den quellfähigen Materialien getränkt werden, dass eine vollständige Umhüllung der Fasern erreicht wird.

Als quellfähige Materialien eignen sich u.a. carboxylgruppenreiche Polymere, vorzugsweise auf der Basis von Copolymeren ungesättigter Carbonsäuren oder deren Derivate mit untergeordneten Anteilen anderer Comonomeren.

Die als quellfähige Materialien verwendeten carboxylgruppenreichen Polymere werden in Form einer Emulsion von organischen Lösungsmitteln und Wasser sowie den carboxylgruppenreichen Polymeren auf die Fasern und/oder Bänder aufgebracht.

Geeignete organische Lösungsmittel sind die in der chemischen Technologie üblicherweise eingesetzten Lösungsmittel u. a. aliphatische, cycloaliphatische oder aromatische Kohlenwasserstoffe, beispielsweise Hexan oder Heptan, Cyclohexan, Toluol oder Xylole. Daneben sind auch organische Etherverbindungen wie zum Beispiel Petrolether oder Tetrahydrofuran sowie halogenierte Kohlenwasserstoffe denkbar. Gut geeignete organische Lösungsmittel sind ferner u.a. Mineralöle.

Hierfür geeignete Mineralöle sind im wesentlichen die aus mineralischen Rohstoffen, wie Erdöl, Kohle, Holz oder Torf gewonnenen flüssigen Destillationsprodukte, welche überwiegend aus Gemischen von gesättigten Kohlenwasserstoffen bestehen. Beispiele für derartige Mineralöle sind u.a. Benzin, Dieselöle, Heizöle, Schmieröle, Leuchtpetroleum oder Isolieröle.

Neben den organischen Lösungsmitteln und Wasser enthält die erfindungsgemäß verwendete Emulsion carboxylgruppenreiche Polymere, vorzugsweise auf der Basis von Copolymeren allylisch oder vinylisch ungesättigter Carbonsäuren oder deren Derivate, beispielsweise deren Ester, Amide oder Nitrile sowie Anhydride, mit untergeordneten Anteilen anderer Comonomerer.

Die carboxylgruppenreichen Polymere können als sogenannte Hauptmonomere allylisch oder vinylisch ungesättigte Mono- oder Dicarbonsäuren enthalten. Bevorzugt sind dabei vinylisch ungesättigte Mono- oder Dicarbonsäuren wie u.a. Acrylsäure und/oder Methacrylsäure sowie Maleinsäure, Fumarsäure oder Itaconsäure, bzw. deren Ester, Amide, Nitrile oder Anhydride. Bevorzugte Hauptmonomere sind Acrylsäure sowie Methacrylsäure, wobei Acrylsäure besonders empfehlenswert ist.

Der Anteil dieser Hauptmonomeren am gesamten carboxylgruppenreichen Polymeren liegt vorzugsweise im Bereich von 60 Gew.-% bis 99,9 Gew.-%, insbesondere bei 70 Gew.-% bis 99 Gew.-% und besonders bevorzugt bei 80 Gew.-% bis 98 Gew.-%. Dementsprechend beträgt der Anteil des oder der Comonomere 0,1 bis 40 Gew.-%, insbesondere 1 bis 30 Gew.-% und besonders bevorzugt 2 bis 20 Gew.-%.

Die carboxylgruppenreichen Polymere können eines oder mehrere der nachstehenden Comonomere enthalten:
- Estern aus vorzugsweise 3 bis 6 C-Atomen aufweisenden α,β-monoethylenisch ungesättigten Mono- oder Dicarbonsäuren, wie Acrylsäure, Methacrylsäure, Maleinsäure, Fumarsäure und Itaconsäure mit C₁-C₁₂-, vorzugsweise C₁-C₈-Alkanolen. Derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat;
- Acrylnitril, Methacrylnitril;
- Acrylamiden und alkylsubstituierten Acrylamiden, wie z. B. Acrylamid, Methacrylamid, N,N-Dimethylacrylamid, N-Methylolmethacrylamid, N-tert.-Butylacrylamid, N-Methylmethacrylamid, Methylenbisacrylamid und Mischungen davon;
- sulfogruppenhaltigen Monomeren, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;
- C₁-C₄-Hydroxyalkylestern von C₃-C₆-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten C₁-C₁₈-Alkoholen mit den erwähnten Säuren, wie z. B. Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen;
- Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylat-chlorid, 3-(N,N-Dimethyl-amino)-propyl(meth)acrylat, 2-Dimethylaminoethyl(meth)acrylamid, 3-Dimethylaminopropyl(meth)acrylamid, 3-Trimethylammoniumpropyl(meth)acrylamid-chlorid und Mischungen davon;
- 1,3-Diketogruppen enthaltenden Monomeren, wie z. B. Acetoacetoxyethyl(meth)acrylat oder Diacetonacrylamid, harnstoffgruppenhaltigen Monomeren, wie Ureidoethyl(meth)acrylat, Acrylamidoglykolsäure, Methacrylamidoglykolatmethylether;
- Silylgruppen enthaltenden Monomeren, wie z. B. Trimethoxysilylpropylmethacrylat.

Besonders bevorzugte Comonomere sind u.a. Ester oder Amide der Acrylsäure oder der Methacrylsäure, beispielsweise n-Butylacrylat, 2-Ethylhexylacrylat und/oder methacrylat, Acrylamid oder Methacrylamid.

Die erfindungsgemäß einzusetzenden carboxylgruppenreichen Polymere können auch in Mengen von bis zu 2 Gew.-%, insbesondere bis zu 1 Gew.-%, vorzugsweise bis zu 0,5 Gew.-% bi- oder multifunktionelle Comonomere aufweisen, welche für eine leichte Vernetzung der entstehenden carboxylgruppenreichen Polymere sorgen. Geeignet ist hierfür u.a. Methylenbisacrylamid. Durch den Einbau der bi- oder multifunktionellen Monomere entstehen Polymere, die weitgehend wasserunlöslich, aber noch sehr gut quellbar sind.

Die Herstellung derartiger carboxylgruppenreicher Polymerer erfolgt vorzugsweise durch radikalische Polymerisation in der Emulsion aus organischen Lösungsmitteln und Wasser.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z.B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Weiter können die erfindungsgemäß einzusetzenden Emulsionen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdikkungsmittel, Dispersionen, Plastifizierungsmittel, Retentionsmittel, Pigmente und Füllstoffe enthalten. Das Einmischen dieser Füllstoffe kann auch durch Induktionserwärmung erfolgen, was die Aushärtung erleichtert.

Die zur Einführung der quellfähigen Materialien verwendeten Emulsionen aus organischen Lösungsmitteln, Wasser und carboxylgruppenreichen Polymeren können durch grenzflächenaktive Hilfsstoffe stabilisiert werden. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE-A 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Die Monomere der carboxylgruppenreichen Polymere können vor oder während der Polymerisation ganz oder teilweise durch Basen neutralisiert werden. Als Basen kommen beispielsweise Alkalioder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin oder Morpholin in Frage. Bevorzugt wird dabei Natriumhydroxid eingesetzt.

In den erfindungsgemäßen textilen Gebilden können auch Kombinationen von carboxylgruppenreichen Polymeren einerseits und granulären superabsorbierenden Polymeren auf Basis von teilneutralisierten vernetzten Polyacrylsäuren andererseits vorliegen. Die superabsorbierenden teilneutralisierten Polyacrylsäuren können mit üblichen Vernetzern, die vorzugsweise mindestens zwei ethylenisch ungesättigte Doppelbindungen, eine ethylenisch ungesättigte Doppelbindung und eine weitere funktionelle Gruppe oder aber zwei funktionelle Gruppen aufweisen, vernetzt werden. Die funktionellen Gruppen dieser Vernetzer sollten dabei in der Lage sein, mit den Säuregruppen der Acrylsäure zu reagieren. Geeignete funktionelle Gruppen sind beispielsweise Hydroxyl-, Amino-, Epoxi- und Aziridinogruppen. Die granulären superabsorbierenden Polymeren auf Basis von teilneutralisierten vernetzten Polyacrylsäuren weisen üblicherweise Teilchengrößen von 200 bis 800 µm auf.

Es kann sich auch empfehlen, auf der dem Wasser abgewandten Seite der erfindungsgemäßen textilen Gebilde aus Fasern und/oder Bändern sowie quellfähigen Materialien ein Gemisch aus granulären, superabsorbierenden Polymeren auf Basis von teilneutralisierten vernetzten Polyacrylsäuren einerseits und einem Pulver aus Polymeren anderseits aufzubringen. Hierfür eignen sich insbesondere thermoplastischen Pulver aus Polyolefinen wie Polyethylen oder Polypropylen. Dabei sollte ein Mischungsverhältnis zwischen dem granulären, superabsorbierenden Polymeren und dem Polymerpulver von ca. 0,5:1 bis 5:1, insbesondere von 1:1 bis 3:1 eingehalten werden. Das so erhaltene Gemisch aus granulären, superabsorbierenden Polymeren und dem Polymerpulver kann danach mit einem etwa 50 bis 80 g/m² schweren textilen Gebilde mit einer wirksamen Öffnungsweite von weniger als 0,12 mm abgedeckt werden und anschließend durch Hitze und Druck mit dem erfindungsgemäßen textilen Gebilde verbunden werden. Auf diese Weise kann im eingebauten Zustand das aufgequollene quellfähige Material des erfindungsgemäßen textilen Gebildes sich gegen das ebenfalls gequollene granuläre, superabsorbierende Polymer abstützen. Dadurch wird ein Ausspülen des quellfähigen Materials aus dem textilen Gebilde vermieden.

Die erfindungsgemäßen textilen Gebilde können u.a. dadurch hergestellt werden, dass man die Fasern und/oder Bänder mit den quellfähigen Materialien beschichtet, imprägniert, pflatscht, aufschäumt oder besprüht.

Falls es sich bei dem textilen Gebilde um ein Faservlies handelt, kann auch ein unter dem Namen Maliwatt bekanntes Verfahren angewandt werden. Bei diesem Verfahren wird ein Vlies, das aus quer zur Produktionsrichtung abgelegten Fasern besteht, durch Vernähen der Faserlagen mit Fremdfäden in Längsrichtung im Abstand von etwa 1 mm verfestigt. In diese Faserschicht wird dann das quellfähige Material eingestreut.

Anstelle des Faservlieses kann das textile Gebilde auch ein textiles Gewebe sein.

Die erfindungsgemäßen textilen Gebilde können Bestandteile von ebenfalls erfindungsgemäßen Abdichtungen sein, welche neben dem textilen Gebilde noch wenigstens eine Dichtungsbahn aus Kunststoffen aufweisen. Bevorzugt ist dabei eine solche Anordnung, in der die Abdichtung ein textiles Gebilde aufweist, welches zwischen zwei Dichtungsbahnen aus Kunststoffen angeordnet ist. Das textile Gewebe kann dabei durch übliche Befestigungsverfahren wie beispielsweise durch Verhaken, Kleben, Anknüpfen oder durch Kalandrieren unter Druck und Temperatur mit den Dichtungsbahnen verknüpft werden.

Das erfindungsgemäße textile Gebilde kann u.a. als Dichtungsmaterial für den Straßen-, Tunnel- und Wasserbau sowie für Baugruben, den Hochwasserschutz und für Dachabdichtungen verwendet werden.

Speziell bei Baugruben, im Straßenbau und beim Hochwasserschutz kann das erfindungsgemäße textile Gebilde entweder auch allein, oder aber in Kombination mit Gemischen aus granulären, superabsorbierenden Polymeren und Pulvern aus anderen Polymeren eingesetzt werden.

Denkbar sind hierbei insbesondere der Einbau des textilen Gebildes unter einer Dichtungsbahn aus Kunststoff gegen das zu schützende Bauwerk zur Verhinderung von Unterläufigkeit bei Schäden an der Dichtungsbahn, beispielsweise für Flachdächer im Hochbau, bei Tunnels in offener Bauweise sowie bei Abdichtungen von Tiefgeschossen oder Tiefgaragen.

Andere Einsatzmöglichkeiten des textilen Gebildes beziehen sich auf dessen Einbau zwischen zwei Dichtungsbahnen als sogenannte selbstheilende Abdichtungen im Tunnelbau (gemäß der DE-A 19625245) sowie als Bestandteil einer Membranwanne im Verkehrswegebau (gemäß der DE-A 19930701) oder im Hoch- und Industriebau.

Weiter Anwendungsmöglichkeiten des erfindungsgemäßen textilen Gebildes betreffen dessen Einbau unter der Betonschutzschicht für eine Kunststoffdichtungsbahn in Becken und Kanälen zur Verhinderung von Sickerströmungen unter den Betonplatten zu Schadstellen in der Kunststoffdichtung und zur Verringerung der Spannung in den Betonplatten durch verringerte Reibung. Beispiele hierfür wäre u.a. der Einbau der textilen Gebilde in Regenrückhaltebecken, Landschaftsteiche, Schlammbecken sowie in Bewässerungsund Kraftwerkskanälen bei grobkörnigen Böden.

Denkbar ist weiterhin der Einbau des textilen Gebildes entweder allein oder aber in Verbindung mit anderen Abdichtungsbahnen im Erdbau anstelle von Tondichtungsbahnen, insbesondere in Bewässerungs- oder Ableitungskanälen, zur Abdichtung von Landschaftsteichen, Speicherteichen oder Schutzgebieten, zur Schaffung künstlicher Grundwasserträger sowie zur Erstdichtung von Membranwannen und Baugruben.

Die erfindungsgemäßen textilen Gebilde können auch in Kombination mit Schutzvliesen, welche dem Schutz von Dichtungen dienen, eingesetzt werden. Derartige Schutzvliese bremsen bei Schäden in der Dichtung in körnigen Böden den Zustrom des Wassers zur Schadensstelle nicht (vertikale Durchlässigkeit). Bei bindigeren Böden fördern sie die Sammlung und Verteilung des durch die Schadensstelle strömenden Wassers (horizontale Durchlässigkeit). Das erfindungsgemäße textile Gebilde erhöht hierbei durch seine Abdichtungsfunktion die Sicherheit.

Eine weitere Möglichkeit des Einsatzes des erfindungsgemäßen textilen Gebildes besteht darin, dieses als Verkleidung und Abdichtung in Drahtkörben einzusetzen, welche als temporärer Hochwasserschutz oder im Wasserbau schnell aufgestellt und dann maschinell mit Splitt, Kies oder Recyclingmaterial befüllt werden können.

Die erfindungsgemäßen textilen Gebilde weisen gegenüber den aus dem Stand der Technik bekannten textilen Vliesen oder Geweben u.a. eine bessere Verarbeitbarkeit (maschinelle Verlegung möglich) und Quellbarkeit sowie eine höhere Wasserundurchlässigkeit, insbesondere auch in horizontaler Richtung auf. Wird das textile Gebilde als Schutzlage eingebaut, verhindert es die Ausbreitung des Wassers und gibt durch seine puffernde Wirkung eine größere Sicherheit gegen übliche Beschädigungen. Dies resultiert daher, dass die vorhandenen Fasern oder Bänder vollständig mit stoffgebundenem Wasser umhüllt sind, so dass keine wasserführenden Schichten entstehen. Weiterhin sind sie mit Dichtungsbahnen sehr gut kaschierbar.

### Beispiel

### I. Herstellung einer erfindungsgemäß einzusetzenden Emulsion

In einem Rührgefäß wurden 270,1 g destilliertes Wasser mit 200 g Acrylsäure (100%ig) sowie 224 g einer 50%igen wässrigen Lösung von Natriumhydroxid, 50 g einer 50%igen wässrigen Lösung von Acrylamid, 18 g einer 1%igen wässrigen Lösung von Methylenbisacrylamid, 0,5 g einer 40%igen wässrigen Lösung von Trilon®C und 1,13 g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200 g Shellsol D 70 (100%ig) und 28 g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und ein Zulauf aus 4,5 g einer 10%igen wässrigen Natriumpersulfatlösung zugegeben und so die Polymerisation gestartet.

Die Starttemperatur betrug dabei 22,7°C. Die Polymerisation sprang sofort an und erreichte nach 35 Minuten eine maximale Temperatur von 62,6°C. Nachdem die Temperatur um 1°C abgefallen war, wurde ein weiterer Zulauf aus 2,25 g einer 10%igen wässrigen Natriumpersulfatlösung hinzugegeben und 10 Minuten später nochmals 1,67 g einer 1%igen wässrigen Rongalitlösung hinzugefügt. Auf diese Weise erhält man eine Emulsion aus Mineralöl, Wasser und carboxylgruppenreichen Copolymeren der Acrylsäure.

Dabei bedeuten

| | |
|---|---|
| Shellsol D 70 | (Mineralöl der Shell AG) |
| Emulan® GOE | (Emulgator der BASF Aktiengesellschaft, auf Basis von Oleylglycerinetherethoxylat) |
| Trilon® C | (Komplexbildner der BASF Aktiengesellschaft, auf Basis des Trinatriumsalzes der Hydroxyethylethylendiamintriessigsäure in Wasser) |
| Rongalit® C | (Reduktionsmittel der BASF Aktiengesellschaft, auf Basis des Natriumsalzes der Hydroxymethansulfinsäure) |

### Beispiel 1

In einem Rührgefäß wurden 330,1g destilliertes Wasser mit 225g Acrylsäure (100%ig) sowie 189g einer 50%igen wässrigen Lösung von Natriumhydroxid, 18g einer 1%igen wässrigen Lösung von Methylenbisacrylamid, 0,35g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und ein Zulauf aus 4,5g einer 10%igen wässrigen Natriumpersulfatlösung zugegeben und so die Polymerisation gestartet.

Die Starttemperatur betrug dabei 20,8°C. Die Polymerisation sprang sofort an und erreichte nach 12 Minuten eine maximale Temperatur von 71,4°C. Nachdem die Temperatur um 1°C abgefallen war, wurde ein weiterer Zulauf aus 2,25g einer 10%igen wässrigen Natriumpersulfatlösung hinzugegeben und 10 Minuten später nochmals 1,67g einer 10%igen wässrigen Ascorbinsäurelösung hinzugefügt. Auf diese Weise erhält man eine Emulsion aus Mineralöl, Wasser und carboxylgruppenreichen Copolymeren der Acrylsäure.

### Beispiel 2

In einem Rührgefäß wurden 267,1g destilliertes Wasser mit 225g Acrylsäure (100%ig) sowie 252g einer 50%igen wässrigen Lösung von Natriumhydroxid, 18g einer 1%igen wässrigen Lösung von Methylenbisacrylamid, 0,35g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und ein Zulauf aus 4,5g einer 10%igen wässrigen Natriumpersulfatlösung zugegeben und so die Polymerisation gestartet.

Die Starttemperatur betrug dabei 20,2°C. Die Polymerisation sprang sofort an und erreichte nach 70 Minuten eine maximale Temperatur von 62,8°C. Nachdem die Temperatur um 1°C abgefallen war, wurde ein weiterer Zulauf aus 2,25g einer 10%igen wässrigen Natriumpersulfatlösung hinzugegeben und 10 Minuten später nochmals 1,67g einer 10%igen wässrigen Ascorbinsäurelösung hinzugefügt. Auf diese Weise erhält man eine Emulsion aus Mineralöl, Wasser und carboxylgruppenreichen Copolymeren der Acrylsäure.

### Beispiel 3

In einem Rührgefäß wurden 339,3g destilliertes Wasser mit 225g Acrylsäure (100%ig) sowie 189g einer 50%igen wässrigen Lösung von Natriumhydroxid, 18g einer 1%igen wässrigen Lösung von Methylenbisacrylamid und 0,35g einer 40%igen wässrigen Lösung von Trilon®D vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 50°C erhöht. Danach wurde ein Zulauf aus 0,15g einer 30%igen Lösung von V 65 in Aceton zugegeben und so die Polymerisation gestartet.

Die Polymerisation wurde 1,5 Stunden bei einer Temperatur zwischen 47-50°C gehalten. Danach wurden nochmals 0,23g einer 30%igen Lösung von V 65 in Aceton zugegeben und die Reaktionslösung 2 Stunden bei einer Temperatur von 55°C gehalten. Anschließend wurden nach Abkühlen der Reaktionslösung 63g einer 50%igen wässrigen Lösung von Natriumhydroxid zugegeben. Auf diese Weise erhält man eine Emulsion aus Mineralöl, Wasser und carboxylgruppenreichen Copolymeren der Acrylsäure.

### Beispiel 4

In einem Rührgefäß wurden 270,1g destilliertes Wasser mit 200g Acrylsäure (100%ig) sowie 224g einer 50%igen wässrigen Lösung von Natriumhydroxid, 50g einer 50%igen wässrigen Lösung von Acrylamid, 18g einer 1%igen wässrigen Lösung von Methylenbisacrylamid, 0,35g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und ein Zulauf aus 4,5g einer 10%igen wässrigen Natriumpersulfatlösung zugegeben und so die Polymerisation gestartet.

Die Starttemperatur betrug dabei 22,7°C. Die Polymerisation sprang sofort an und erreichte nach 35 Minuten eine maximale Temperatur von 62,6°C. Nachdem die Temperatur um 1°C abgefallen war, wurde ein weiterer Zulauf aus 2,25g einer 10%igen wässrigen Natriumpersulfatlösung hinzugegeben und 10 Minuten später nochmals 1,67g einer 10%igen wässrigen Ascorbinsäurelösung hinzugefügt. Auf diese Weise erhält man eine Emulsion aus Mineralöl, Wasser und carboxylgruppenreichen Copolymeren der Acrylsäure. Beispiel 5

In einem Rührgefäß wurden 257,8g destilliertes Wasser mit 200g Acrylsäure (100%ig) sowie 224g einer 50%igen wässrigen Lösung von Natriumhydroxid, 50g einer 50%igen wässrigen Lösung von Acrylamid, 18g einer 1%igen wässrigen Lösung von Methylenbisacrylamid, 0,35g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 39,5°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 6

In einem Rührgefäß wurden 254,5g destilliertes Wasser mit 200g Acrylsäure (100%ig) sowie 227g einer 25%igen wässrigen Lösung von Natriumhydroxid, 50g einer 50%igen wässrigen Lösung von Acrylamid, 18g einer 1%igen wässrigen Lösung von Methylenbisacrylamid, 0,69g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 55,2°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 7

In einem Rührgefäß wurden 48,1g destilliertes Wasser mit 200g Acrylsäure (100%ig) sowie 432,7g einer 25%igen wässrigen Lösung von Natriumhydroxid, 50g einer 50%igen wässrigen Lösung von Acrylamid, 18g einer 1%igen wässrigen Lösung von Methylenbisacrylamid, 1,38g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 50,8°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 8

In einem Rührgefäß wurden 44g destilliertes Wasser mit 200g Acrylsäure (100%ig) sowie 432,7g einer 25%igen wässrigen Lösung von Natriumhydroxid, 50g einer 50%igen wässrigen Lösung von Acrylamid, 18g einer 1%igen wässrigen Lösung von Methylenbisacrylamid, 5,52g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 61,3°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 9

In einem Rührgefäß wurden 46,7g destilliertes Wasser mit 200g Acrylsäure (100%ig) sowie 432,7g einer 25%igen wässrigen Lösung von Natriumhydroxid, 50g einer 50%igen wässrigen Lösung von Acrylamid, 18g einer 1%igen wässrigen Lösung von Methylenbisacrylamid, 2,76g einer 40%igen wässrigen Lösung von Trilon®D und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 31g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 61,0°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 10

In einem Rührgefäß wurden 49,5g destilliertes Wasser mit 200g Acrylsäure (100%ig) sowie 431,7g einer 25%igen wässrigen Lösung von Natriumhydroxid, 50g einer 50%igen wässrigen Lösung von Acrylamid, 18g einer 1%igen wässrigen Lösung von Methylenbisacrylamid, 1,01g einer 40%igen wässrigen Lösung von Trilon®C und 1,13g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 56,8°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 11

In einem Rührgefäß wurden 49,6g destilliertes Wasser mit 200g Acrylsäure (100%ig) sowie 432,1g einer 25%igen wässrigen Lösung von Natriumhydroxid, 50g einer 50%igen wässrigen Lösung von Acrylamid, 18g einer 1%igen wässrigen Lösung von Methylenbisacrylamid, 0,25g einer 40%igen wässrigen Lösung von Trilon®C und 1,35g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 61,2°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### Beispiel 12

In einem Rührgefäß wurden 49,4g destilliertes Wasser mit 200g Acrylsäure (100%ig) sowie 432,1g einer 25%igen wässrigen Lösung von Natriumhydroxid, 50g einer 50%igen wässrigen Lösung von Acrylamid, 18g einer 1%igen wässrigen Lösung von Methylenbisacrylamid, 0,25g einer 40%igen wässrigen Lösung von Trilon®C und 1,58g einer 1%igen wässrigen Lösung von Rongalit®C vermischt. Nach erfolgter Neutralisation der wässrigen Phase mit der vorhandenen Natronlauge wurde diese in ein zweites geschlossenes Rührgefäß (2 Liter HWS, mit Ankerrührer) gegeben, in der sich eine organische Phase aus 200g Shellsol D 70 (100%ig) und 28g Emulan®GOE (100%ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert und die Temperatur der Reaktionslösung auf 30°C erhöht. Danach wurde ein Zulauf aus 1,58g einer 10%igen wässrigen Natriumpersulfatlösung zugegeben und so die Polymerisation gestartet.

Die Polymerisation sprang sofort an und erreichte eine maximale Temperatur von 59,5°C. Nachdem die Temperatur um 1°C abgefallen war, wurde ein weiterer Zulauf aus 11,25g einer 10%igen wässrigen Natriumpersulfatlösung hinzugegeben und 10 Minuten später nochmals 7,88g einer 10%igen wässrigen Rongalitlösung hinzugefügt. Auf diese Weise erhält man eine Emulsion aus Mineralöl, Wasser und carboxylgruppenreichen Copolymeren der Acrylsäure.

### II. Verwendung der nach Abschnitt I erhaltenen Emulsion als Bestandteil eines Quellvlieses aus Fasern

Mit den aus Abschnitt I erhaltenen Emulsion wurden nach üblichen Verfahren Quellvliese aus Polypropylenfasern hergestellt.

Das auf diese Weise erhaltene Quellvlies kann u.a. als Abdichtung für ein Tunnel verwendet werden, wobei sich diese zwischen dem auf dem Fels aufgebrachten Spritzbeton und dem Innenbeton befindet. Auf der dem Fels abgewandeten Seite des Quellvlieses kann zusätzlich eine Kunststoffdichtung in Form einer Polyolefinfolie aufgebracht werden. Dadurch ergibt sich folgender Schichtaufbau für eine Tunneldichtung:

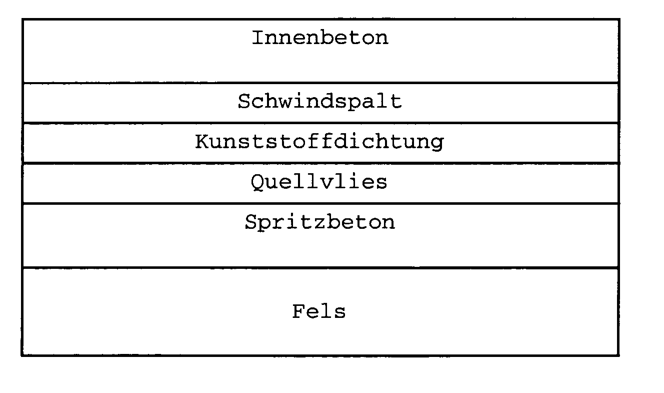

## Patentansprüche

1. Textile zwei- oder dreidimensionale Gebilde aus Fasern und/oder Bändern und quellfähigen Materialien, wobei die im Gebilde vorliegenden Fasern und/oder Bänder sowie die quellfähigen Materialien jeweils in einer solchen Menge vorliegen, dass die Fasern und/oder Bänder von den quellfähigen Materialien umhüllt sind und die Hohlräume der Gebilde im gequollenen Zustand vollständig mit stoffgebundenem Wasser gefüllt sind und wobei als quellfähige Materialien carboxylgruppenreiche Polymere verwendet werden, welche in Form einer Emulsion aus organischen Lösungsmitteln und Wasser sowie den carboxylgruppenreichen Polymeren auf die Fasern und/oder Bänder aufgebracht werden.

2. Textile Gebilde nach Anspruch 1, wobei die Gebilde in Form von Vliesen oder Geweben vorliegen.

3. Textile Gebilde nach den Ansprüchen 1 oder 2, wobei die Gebilde als Fasern Filamente oder Stapelfasern aufweisen.

4. Textile Gebilde nach den Ansprüchen 1 bis 3, wobei die Gebilde als Fasern mineralische, natürliche oder synthetische Fasern enthalten.

5. Textile Gebilde nach den Ansprüchen 1 bis 4, wobei die auf die Fasern und/oder Bänder aufgebrachte Emulsion als organisches Lösungsmittel Mineralöle enthält.

6. Textile Gebilde nach den Ansprüchen 1 bis 5, wobei die Gebilde als quellfähige Materialien carboxylgruppenreiche Polymere auf der Basis von Copolymeren vinylisch ungesättigter Carbonsäuren oder deren Derivate mit untergeordneten Anteilen anderer Comonomere enthalten.

7. Textile Gebilde nach Anspruch 6, wobei die Gebilde carboxylgruppenreiche Polymere auf Basis von Copolymeren der Acrylsäure mit untergeordneten Anteilen von Estern oder Amiden der Acrylsäure oder der Methacrylsäure enthalten.

8. Textile Gebilde nach den Ansprüchen 1 bis 7, wobei die Gebilde als quellfähige Materialien Kombinationen von carboxylgruppenreichen Polymeren einerseits und granulären superabsorbierenden Polymeren auf Basis von teilneutralisierten vernetzten Polyacrylsäuren andererseits aufweisen.

9. Verfahren zur Herstellung von textilen Gebilden gemäß den Ansprüchen 1 bis 8, **dadurch gekennzeichnet, dass** die zwei- oder dreidimensionalen textilen Gebilde durch Beschichten, Imprägnieren, Pflatschen, Aufschäumen oder Besprühen der Fasern und/oder Bänder mit den quellfähigen Materialien erhalten werden.

10. Verwendung der textilen Gebilde gemäß den Ansprüchen 1 bis 8 als Dichtungsmaterialien für den Straßen-, Tunnel- und Wasserbau sowie für Baugruben, Hochwasserschutz und Dachabdichtungen.

11. Abdichtung, enthaltend neben wenigstens einer Dichtungsbahn aus Kunststoffen ein textiles Gebilde nach einem der Ansprüche 1 bis 8.

12. Abdichtung nach Anspruch 11, wobei das textile Gebilde nach einem der Ansprüche 1 bis 8 zwischen zwei Dichtungsbahnen aus Kunststoffen angeordnet ist.

13. Emulsionen aus organischen Lösungsmitteln und Wasser sowie carboxylgruppenreichen Polymeren auf der Basis von vinylisch ungesättigten Carbonsäuren mit untergeordneten Anteilen anderer Comonomerer.
